# EUROPEAN PATENT APPLICATION

(11) **EP 4 617 904 A1**
(43) Date of publication of application: **17.09.2025**
(21) Application number: 24223105.8
(22) Date of filing: 23.12.2024
(51) Int. Cl.: G06F 16/25, G01W 1/10

(54) **DATA OUTPUT DEVICE AND DATA OUTPUT METHOD**

(30) Priority: 15.03.2024 JP 2024041161
(71) Applicant: Hitachi, Ltd., Tokyo 100-8280 (JP)
(72) Inventor: HASEGAWA, Hiroaki, Tokyo 100-8280 (JP); NAKAMURA, Keigo, Tokyo 100-8280 (JP)
(74) Representative: Mewburn Ellis LLP

(57) **Abstract**

A data output device, which includes a processor which executes a program, and a storage device which stores the program, is communicably connected to a data source which stores first time-series data regarding a natural environment and an analysis device which inputs analysis target data from the data output device and executes analysis regarding the natural environment, and includes a recording unit which is capable of recording the analysis target data. The processor executes input processing of receiving an input of an analysis condition regarding the natural environment, first determination processing of determining whether first analysis target data corresponding to an analysis condition input by the input processing exists in the recording unit, and first output processing of outputting the first analysis target data to the analysis device on the basis of a first determination result by the first determination processing.

## Description

### CLAIM OF PRIORITY

The present application claims priority from Japanese patent application No. 2024- 41161 filed on March 15, 2024, the content of which is hereby incorporated by reference into this application.

### BACKGROUND OF THE INVENTION

### 1. Field of the Invention

The present invention relates to a data output device and a data output method for outputting data.

### 2. Description of the Related Art

There are various applications of simulation for analyzing data regarding a natural environment, such as flood prediction, prediction of a river flow rate and water quality, prediction of a power generation amount of renewable energy, and prediction of a yield of crops. For these prediction calculations, weather information with high accuracy over a long period of several decades is required as input data.

In general, weather data includes time-series observation data at a specific point and distribution data in which a distribution amount in a region is recorded. The former is typically an observation value such as a temperature, a precipitation amount, and a solar radiation amount at a weather observation point, and the latter is distribution data of a precipitation amount by a weather radar, a temperature based on a result of a weather simulation, and a wind speed based on a result of a weather simulation.

There are the following problems in utilizing these pieces of weather data. Since the arrangement of the weather observation points is sparse, the time-series observation data is information at a point geographically away from a target region, and thus, the accuracy thereof is questionable. The distribution data needs to be processed to extract only information related to the point of interest from a large amount of grid point information.

In addition, a problem common to both is that the data transfer capability thereof is restricted due to dependence on an external data source. As an example, it takes about several hours to acquire weather data for 20 years in a river basin, and the acquisition time is unignorably long compared to the calculation time of the simulation itself.

Specifically, the problem arises due to the restriction of the data transfer capability that the external data source handles an extremely large amount of data, and information with low usage frequency needs to be called from a slow archive region. In addition, the problem arises due to the restriction of a data storage format that all of a plurality of pieces of (for example, 8760 pieces for 1 year when one time step is 1 hour) distribution data are called and are written out as time-series data of a point of interest.

WO 2019/204254 A below discloses a method of a flood recovery analysis tool. The method of the flood recovery analysis tool includes a plurality of types of processing for accessing weather information of a geographic region divided into a plurality of cells and generating outflow data on the basis of the weather information. The outflow data includes predicted unregulated flowing water on the ground surface of each cell of the region. Further, the method of the flood recovery analysis tool includes a plurality of types of processing for generating inter-cell water inflow and outflow predictions and calculating predicted water depths in each sub-cell on the basis of the inter-cell inflow and outflow predictions and a hydraulic model for a plurality of sub-cells of each cell in the geographic region. Further, the method of the flood recovery analysis tool includes a plurality of types of processing for generating a flood inundation map indicating a predicted water depth of each sub-cell in the geographic region and presenting the flood inundation map in a user interface of a display device.

"Teng, William, Rui, Hualan, Strub, Richard, and Vollmer, Bruce, 2016. Optimal Reorganization of NASA Earth Science Data for Enhanced accessibility and Usability for the Hydrology Community. Journal of the American Water Resources Association (JAWRA) 52(4): 825 - 835. DOI: 10.1111/1752-1688.12405" below discloses a method of creating and holding a time-series data set called "Data Rods" in advance.

### SUMMARY OF THE INVENTION

To perform a simulation regarding a natural environment, weather information with high accuracy over a long period of time is required as input data. The distribution data described above needs to be processed to extracted from mesh data and aligned in chronological order. In addition, since the observation data and the distribution data are restricted in the data transfer capability depending on the external data source, a lead time from a data acquisition request to start of data analysis becomes long.

WO 2019/204254 A discloses, as a flood monitoring system, a system that performs and displays flood prediction based on weather data. A part of the configuration includes a flood analysis device based on automatic generation of model data, showing that weather data is recorded in a cache and a server as appropriate. However, a specific configuration method thereof and a method for achieving both a processing time accompanying the format conversion of large-scale data and a storage capacity are not mentioned.

In "Teng, William, Rui, Hualan, Strub, Richard, and Vollmer, Bruce, 2016. Optimal Reorganization of NASA Earth Science Data for Enhanced accessibility and Usability for the Hydrology Community. Journal of the American Water Resources Association (JAWRA) 52(4): 825 - 835. DOI: 10.1111/1752-1688.12405", it is necessary to occupy twice the storage capacity in an overlapping manner with the distribution data. Global, decades-long datasets reach petabyte-scale capacity, and it is impractical for a single user to hold and operate. It is desirable that such data held by the external data source can be pinpointed and extracted according to the analysis work. However, the access speed problem described above occurs. This problem is particularly problematic in a use case requiring a large number of recalculations associated with condition change and optimization.

An object of the present invention is to perform presence confirmation of analysis data used by an analysis device before analysis.

A data output device according to one aspect of the invention disclosed in the present application is a data output device which includes a processor which executes a program, and a storage device which stores the program. The data output device is communicably connected to a data source which stores first time-series data regarding a natural environment and an analysis device which inputs analysis target data from the data output device and executes analysis regarding the natural environment, and includes a recording unit which is capable of recording the analysis target data, and the processor executes input processing of receiving an input of an analysis condition regarding the natural environment, first determination processing of determining whether first analysis target data corresponding to an analysis condition input by the input processing exists in the recording unit, and first output processing of outputting the first analysis target data to the analysis device on the basis of a first determination result by the first determination processing.

According to the representative embodiment of the present invention, it is possible to confirm the presence of analysis data used by the analysis device before solution. Problems, configurations, and effects other than those described above will become apparent from the description of the following embodiments.

### BRIEF DESCRIPTION OF THE DRAWINGS

Fig. 1 is an explanatory diagram illustrating an example of an analysis system;
Fig. 2 is a block diagram illustrating a hardware configuration example of a computer;
Fig. 3 is a block diagram illustrating a functional configuration example of an analysis device;
Fig. 4 is an explanatory diagram illustrating an execution time lapse in the analysis system;
Fig. 5 is a sequence diagram illustrating a data request sequence 1 (no reused data);
Fig. 6 is a sequence diagram illustrating an initial analysis sequence (no reused data);
Fig. 7 is a sequence diagram illustrating analysis target acquisition processing 2 (no reused data);
Fig. 8 is a sequence diagram illustrating a sequence of data shaping and calibration (no reused data);
Fig. 9 is a sequence diagram illustrating a sequence of data shaping and validation (no reused data);
Fig. 10 is a sequence diagram illustrating the data request sequence 1 (with reused data);
Fig. 11 is a sequence diagram illustrating the initial analysis sequence (with reused data);
Fig. 12 is a sequence diagram illustrating the calibration sequence (with reused data);
Fig. 13 is a sequence diagram illustrating the validation sequence (no reused data);
Fig. 14 is an explanatory diagram illustrating a display example of a region setting screen;
Fig. 15 is a sequence diagram illustrating a selection sequence of an analysis target river;
Fig. 16 is an explanatory diagram illustrating a display example of an analysis management screen; and
Fig. 17 is an explanatory diagram illustrating a display example of a result display screen.

### DESCRIPTION OF THE PREFERRED EMBODIMENTS

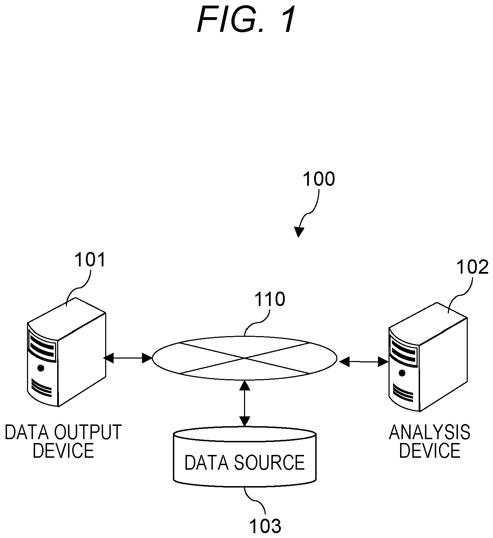

### <Fig. 1 Analysis System>

Fig. 1 is an explanatory diagram illustrating an example of an analysis system. An analysis system 100 includes a data output device 101, an analysis device 102, and a data source 103. The data output device 101, the analysis device 102, and the data source 103 are communicably connected via a network 110 such as the Internet, a local area network (LAN), or a wide area network (WAN).

The data output device 101 forms input data regarding the natural environment used in the analysis of the analysis device 102. The analysis device 102 executes analysis on the input data formed by the data output device 101. The data source 103 is a website or a public database existing on the network 110. The data source 103 stores map data and weather data.

The map data is latitude, longitude, and altitude of an observation point. The weather data is observation data regarding weather at an observation point, and includes, for example, a temperature, a water amount, a nitrogen concentration, a phosphorus concentration, and the like. Original data is, for example, map data and weather data for a predetermined period (for example, one year) within an analysis target period.

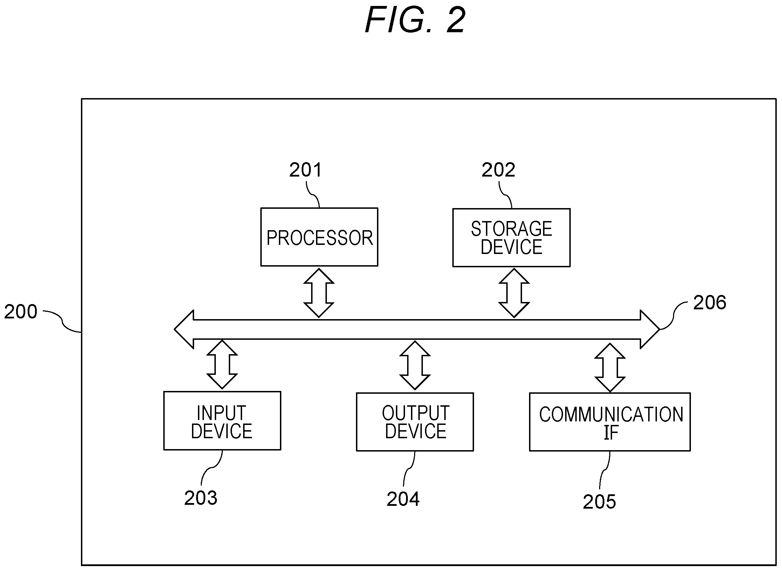

### <Fig. 2 Hardware configuration example of computer (data output device 101 and analysis device 102)>

Fig. 2 is a block diagram illustrating a hardware configuration example of a computer. A computer 200 includes a processor 201, a storage device 202, an input device 203, an output device 204, and a communication interface (communication IF) 205. The processor 201, the storage device 202, the input device 203, the output device 204, and the communication IF 205 are connected by a bus 206. The processor 201 controls the computer 200. The storage device 202 serves as a work area of the processor 201. In addition, the storage device 202 is a non-transitory or transitory recording medium that stores various programs and data. Examples of the storage device 202 include a read only memory (ROM), a random access memory (RAM), a hard disk drive (HDD), and a flash memory. The input device 203 inputs data. Examples of the input device 203 include a keyboard, a mouse, a touch panel, a numeric keypad, a scanner, a microphone, and a sensor. The output device 204 outputs data. Examples of the output device 204 include a display, a printer, and a speaker. The communication IF 205 is connected to the network 110 to transmit and receive data.

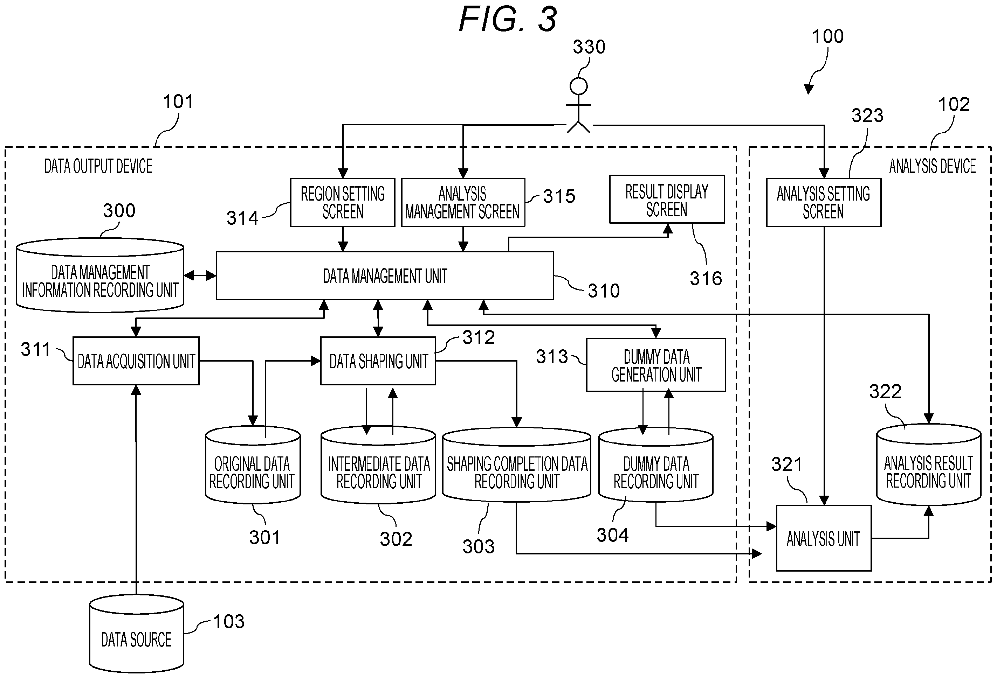

### <Fig. 3 Functional configuration example of analysis device 102>

Fig. 3 is a block diagram illustrating a functional configuration example of the analysis device 102. The data output device 101 includes a data management unit 310, a data acquisition unit 311, a data shaping unit 312, and a dummy data generation unit 313. Specifically, the data management unit 310, the data acquisition unit 311, the data shaping unit 312, and the dummy data generation unit 313 are realized, for example, by causing the processor 201 to execute a program stored in the storage device 202 illustrated in Fig. 2.

The data output device 101 includes a data management information recording unit 300, an original data recording unit 301, an intermediate data recording unit 302, a shaping completion data recording unit 303, and a dummy data recording unit 304. Specifically, the data management information recording unit 300, the original data recording unit 301, the intermediate data recording unit 302, the shaping completion data recording unit 303, and the dummy data recording unit 304 are realized by, for example, the storage device 202 illustrated in the drawing.

In addition, the original data recording unit 301, the intermediate data recording unit 302, the shaping completion data recording unit 303, and the dummy data recording unit 304 may be constructed on an independent server such as a file server or a distributed storage, or may be provided through a database system such as a relational database or a key value store.

The data output device 101 includes a region setting screen 314, an analysis management screen 315, and a result display screen 316. The region setting screen 314 is a screen for setting an analysis target region. The analysis management screen 315 is a screen for managing analysis. The result display screen 316 is a screen for displaying an analysis result. Specifically, the region setting screen 314, the analysis management screen 315, and the result display screen 316 are realized by, for example, a display which is an example of the output device 204 illustrated in Fig. 2.

The analysis device 102 includes an analysis unit 321. Specifically, the analysis unit 321 is realized, for example, by causing the processor 201 to execute a program stored in the storage device 202 illustrated in Fig. 2.

The analysis device 102 includes an analysis result recording unit 322. Specifically, the analysis result recording unit 322 is realized by, for example, the storage device 202 illustrated in the drawing.

The analysis device 102 has an analysis setting screen 323. Specifically, the analysis setting screen 323 is realized, for example, by causing the processor 201 to execute a program stored in the storage device 202 illustrated in Fig. 2.

### (Data management information recording unit 300)

The data management information recording unit 300 records data management information. The data management information is information used by the data management unit 310. For example, the data management information is information regarding a river to be subjected to data management. The information regarding a river includes not only geographical information such as a position, a length, and a width of the river, but also water quality information such as a flow rate and a content.

### (Data management unit 310)

The data management unit 310 manages the data acquisition unit 311, the data shaping unit 312, and the dummy data generation unit 313, and generates a watershed model necessary for simulation. The data management unit 310 executes, for example, the following processing.

The data management unit 310 receives an input from a user 330 and instructs the data acquisition unit 311 to acquire map data and weather data.

The data management unit 310 refers to the original data recording unit 301 and the intermediate data recording unit 302, and specifies a range of data requiring access to the external data source 103 for each of the calibration period and the validation period.

The data management unit 310 instructs the analysis device 102 to perform initial analysis. The data management unit 310 may display an analysis process and an estimated completion time on the analysis management screen 315. The data management unit 310 refers to the data management information recording unit 300 to search a list of rivers.

### (Data acquisition unit 311 and original data recording unit 301)

The data acquisition unit 311 acquires data from the data source 103 and records the acquired data in the original data recording unit 301. Specifically, for example, in response to an instruction from the data management unit 310, the data acquisition unit 311 accesses the data source 103 to acquire map data and weather data, and records the map data and the weather data in the original data recording unit 301. The map data and the weather data recorded in the original data recording unit 301 are referred to as original data.

The data acquisition unit 311 can request the data source 103 to appropriately divide a data acquisition range (for example, in the case of distribution data, for each physical quantity (a distribution amount at one time point in a predetermined latitude and longitude range including a river basin), and in the case of time-series data, for each observation point in units of periods of one month) according to the specification acceptable by the data source 103.

### (Data shaping unit 312, shaping completion data recording unit 303, and intermediate data recording unit 302)

The data shaping unit 312 shapes the original data recorded in the original data recording unit 301. Specifically, for example, the data shaping unit 312 appropriately converts the original data into a format that is internally easy to handle, extracts and combines the original data according to a necessary space region and time section, performs format conversion and unit conversion into a form that can be read by the analysis unit 321, and records the result in the shaping completion data recording unit 303. The data recorded in the shaping completion data recording unit 303 is referred to as shaping completion data.

The shaping completion data recording unit 303 stores the shaping completion data without discarding the shaping completion data for a certain period even after the analysis by the analysis unit 321 is completed. The shaping completion data is reused when the analysis for the same spatial region or the same time section is instructed again.

Note that the data shaping unit 312 records, as intermediate data, the data obtained by combining a plurality of pieces of original data in the intermediate data recording unit 302. For example, assuming that the analysis target period is ten years and one piece of original data is time-series data for one year, time-series data for ten years obtained by connecting ten pieces of original data in time-series is the intermediate data. The data shaping unit 312 reads the intermediate data from the intermediate data recording unit 302. The read intermediate data can also be reused (extracted and shaped for a different time section) in another analysis. Note that the original data, the intermediate data, and the shaping completion data are referred to as analysis target data.

### (Dummy data generation unit 313 and dummy data recording unit 304)

The dummy data generation unit 313 generates dummy data different from actual measurement. Specifically, for example, the dummy data generation unit 313 generates dummy data on the basis of a statistic such as a possible range or an average value of each numerical value instead of actual data. For example, the dummy data generation unit 313 may calculate, as the dummy data, a statistic such as an average value of the observation data in the original data recorded in the original data recording unit 301. Accordingly, in applications where calculation accuracy is not required, the analysis unit 321 can perform analysis on the basis of the dummy data without waiting for data acquisition and data shaping.

### (Analysis unit 321 and analysis result recording unit 322)

After the preparation of the model data is completed, the analysis unit 321 generates the watershed model on the basis of the input from the user 330 and the model data. The watershed model is a model called a Hydrological Response Unit (HRU) in which a watershed is represented by an aggregate of grids subdivided by a combination of a type of soil, land use, an altitude, and a gradient thereof, and is, for example, a soil & water assessment tool (SWAT) model.

The analysis unit 321 executes analysis with the generated watershed model. For example, the analysis unit 321 calculates a temporal change in the river flow rate and the water quality on the basis of a topography, a precipitation amount, and a vegetation distribution in the watershed model. At this time, the analysis unit 321 calculates an amount of rainwater reaching the ground surface, an evaporation and dissipation amount of moisture from the ground surface, an amount of penetration into the soil, an amount of outflow to rivers and groundwater, or a growth amount and mass transfer of vegetation by using a model formula. The analysis unit 321 sequentially records an analysis result in the analysis result recording unit 322. The analysis result can be displayed on the result display screen 316.

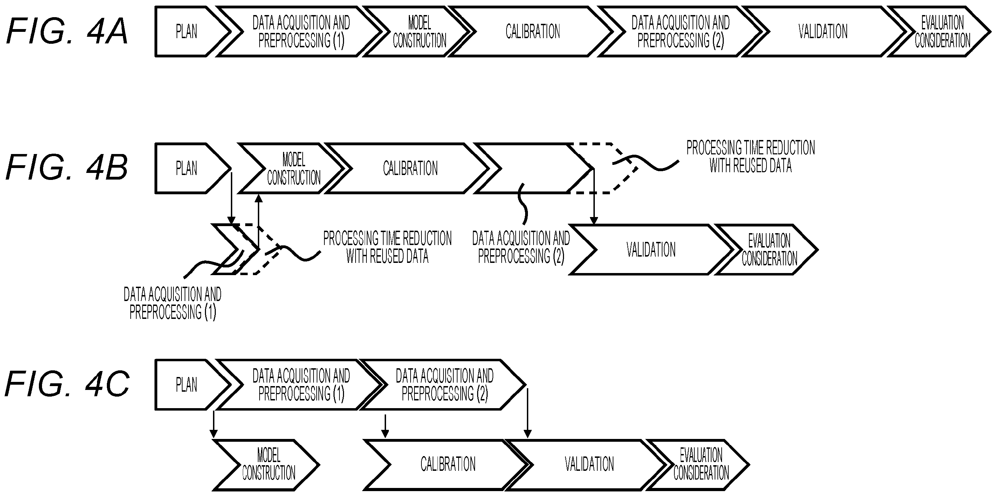

### <Fig. 4: execution time lapse in analysis system 100>

Fig. 4 is an explanatory diagram illustrating an execution time lapse in the analysis system 100. A horizontal direction is a time axis. In the operation of the analysis system 100, when a time lapse from the analysis instruction of the user 330 to the result display is analyzed, the time required for data acquisition may be a non-negligible length with respect to the calculation time of the simulation itself.
(A) indicates an execution time lapse in the related art, that is, an execution time lapse in a case where there is no data output device 101. In (A), the processing is executed in the order of plan -> data acquisition and preprocessing 1 -> watershed model construction -> calibration -> data acquisition and preprocessing 2 -> validation -> evaluation consideration.
(B) indicates an execution time lapse in a case where the acquired data is reused by using the data output device 101. Also in (B), similarly to (A), the processing is executed in the order of plan -> data acquisition and preprocessing 1 -> watershed model construction -> calibration -> data acquisition and preprocessing 2 -> validation -> evaluation consideration. However, in (B), since the data output device 101 reuses the acquired data in the data acquisition and preprocessing 1, the processing time of the data acquisition and preprocessing 1 is shorter than the processing time of the data acquisition and preprocessing 1 in (A). Similarly, in (B), since the data output device 101 reuses the acquired data in the data acquisition and preprocessing 2, the processing time of the data acquisition and preprocessing 2 is shorter than the processing time of the data acquisition and preprocessing 2 in (A).
   That is, in (B), the acquired data is accumulated therein, and can be reused when a data request for the same section and point occurs. With such a cache function, the number of slow accesses to the external data source 103 is reduced, and a waiting time until the start of analysis is shortened.
(C) indicates an execution time lapse in a case where the data acquisition and the analysis are performed in parallel by using the data output device 101. In (C), the data acquisition and preprocessing 1 are performed in parallel with the watershed model construction. Therefore, the data acquisition and preprocessing 1 are performed in parallel with the calibration. Therefore, the execution time is shortened as compared with (A). In the present embodiment, the processing as described in (B) or (C) can be performed.

That is, in (C), the data waiting time is hidden by executing the data acquisition and the analysis processing in parallel. In general, analysis is started after the completion of the construction of the watershed model, but depending on the use case, calculation may be started early before all data in the period to be analyzed is completely acquired. In such a case, instead of waiting for arrival of all data as in (A), analysis can be executed by using only the acquired data.

The execution of the river basin model roughly requires initial analysis, calibration, and validation. The initial analysis includes construction of the watershed model and confirmation as to whether a data format conforms to the required specifications (a file format, an input range of numerical value, a unit system, and the like) of the analysis unit 321.

The calibration is adjustment of model parameters of the watershed model performed to match the observation data (a water amount, a water level, or a water quality) with the data calculated by the watershed model. The validation is processing of verifying the calculation accuracy of the watershed model for which the calibration has been completed.

In the validation, the calculation of the watershed model is performed using data of a period different from the period of the data applied to the calibration, and it is confirmed whether the calculation of the watershed model can be appropriately continued even after the calibration.

That is, the time-series data applied to the validation is different in date from the time-series data applied to the calibration and does not overlap. As a result, the acquisition of the time-series data for validation can be performed in parallel during the execution of calibration calculation.

The weather data or the water level data is used with a time step of one day over a period of several decades. For example, in the calibration, the data for 5 years is used, and in the validation, the data for 20 years is used. In addition, at the time of calibration calculation, the model parameters of the watershed model are variously changed, and an optimal model parameter is decided after 100 or more times of repeated calculation.

As a result, the nature and period of the input data required for each of the initial analysis, calibration, and validation calculation are different, so that each acquisition and calculation using the acquisition can be executed in parallel (within a constraint of a certain order relation).

As illustrated in (B) of Fig. 4, in parallel with the data acquisition and preprocessing 1 for calibration by the data output device 101, the analysis device 102 executes initial analysis using dummy data, and executes calibration after the completion of the initial analysis and after the data acquisition for the calibration. Further, as illustrated in (C), the data output device 101 executes the data acquisition and preprocessing 2 for validation during the execution of the calibration by the analysis device 102, and the analysis device 102 executes validation by using the watershed model after the completion of the calibration.

In this manner, the data output device 101 and the analysis device 102 that are independent from each other execute the data acquisition and the analysis in cooperation, and it is possible to eliminate factors that affect a dependence relationship between the processes and the waiting time.

### [Simulation execution example of river water quality]

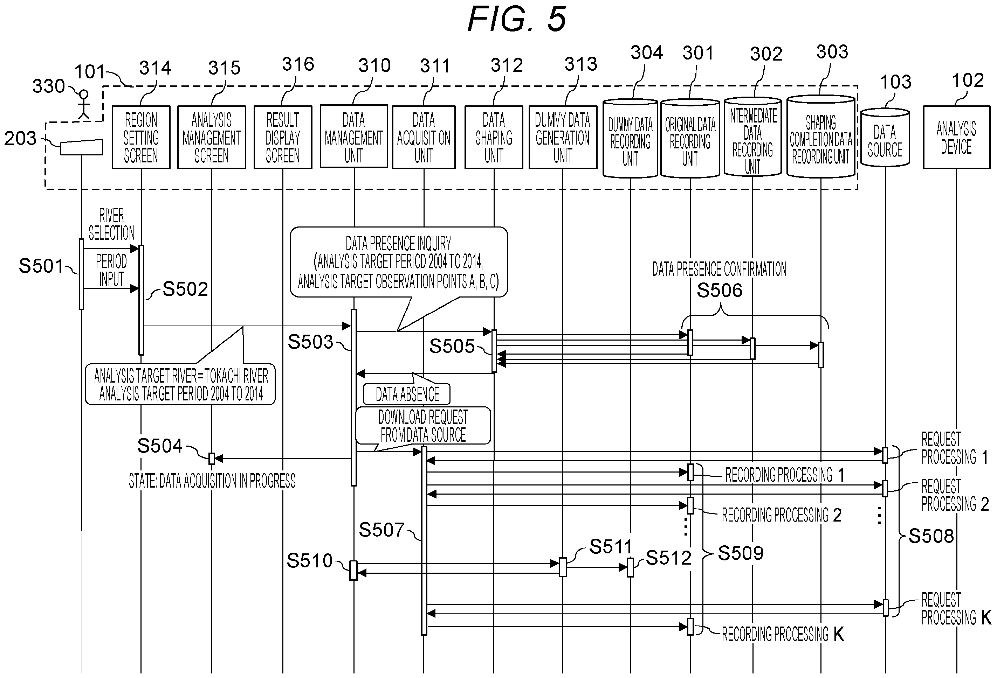

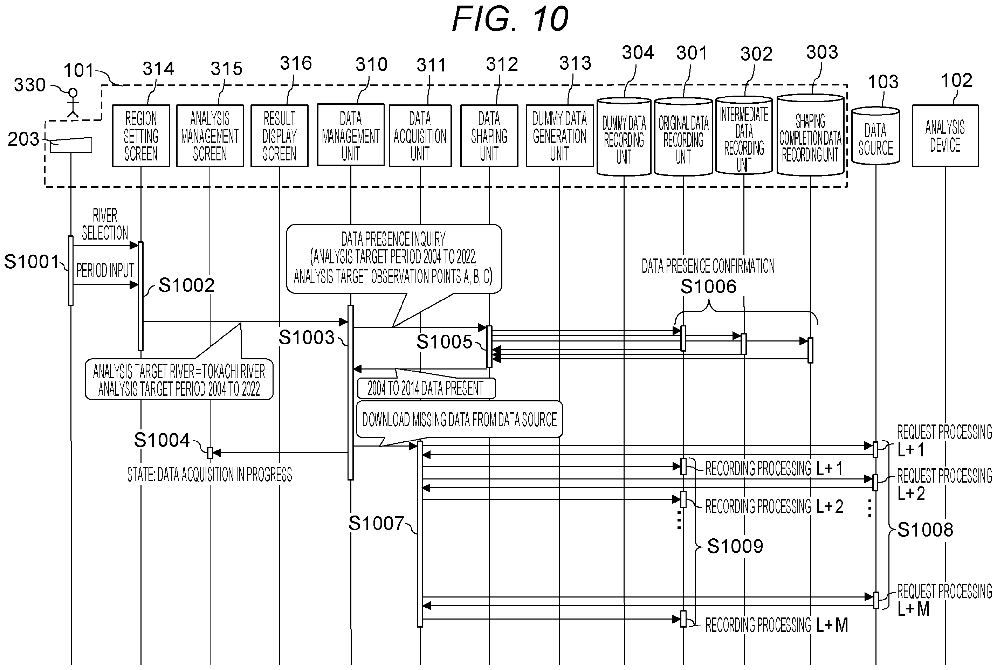

Next, a simulation execution example of the river water quality will be described. Figs. 5 to 9 illustrate simulation execution examples of the river water quality in a case where there is no reused data in the data output device 101, and Figs. 10 to 13 illustrate simulation execution examples of the river water quality in a case where there is reused data in the data output device 101, that is, after the reused data is registered by Figs. 5 to 9.

A difference between the two is whether input data indicating the analysis target region and the analysis target period has been acquired in the original data recording unit 301 or the intermediate data recording unit 302, and shows an operation when the original data recording unit 301 or the intermediate data recording unit 302 works as a data cache or a state of early execution of the initial analysis using dummy data. Hereinafter, description will be given in time-series.

### <Fig. 5 Data request sequence 1 (no reused data)>

Fig. 5 is a sequence diagram illustrating a data request sequence 1 (no reused data).

### (Step S501)

The data output device 101 receives, as analysis conditions regarding the natural environment, selection of an analysis target river and input of an analysis target period by the operation of the input device 203 from the user 330.

### (Step S502)

The data output device 101 displays the analysis target river and the analysis target period, and transmits the analysis target river and the analysis target period to the data management unit 310. In this example, the analysis target river is set as "Tokachi River", and the analysis target period is set as "2004 to 2014".

### (Step S503)

The data management unit 310 executes data acquisition request processing. In the data acquisition request processing, the data management unit 310 specifies one or more observation points (hereinafter, analysis target observation points) on the analysis target river, and transmits a data presence inquiry to the data shaping unit 312. In the case of this example, the analysis target data (reused data) corresponding to the analysis target observation points "A, B, C (of Tokachi River)" and the analysis target period "2004 to 2014" are not cached in the original data recording unit 301, the intermediate data recording unit 302, and the shaping completion data recording unit 303. Therefore, the data management unit 310 receives a data absence notification from the data shaping unit 312.

Since there is no reused data, the data management unit 310 transmits, to the data acquisition unit 311, an acquisition request for map data and weather data (original data) corresponding to the analysis target observation points "A, B, C (of Tokachi River)" and the analysis target period "2004 to 2014" from the data source 103. Then, the data management unit 310 outputs, to the analysis management screen 315, a notification indicating that data acquisition is in progress.

### (Step S504)

The data output device 101 displays "data acquisition in progress" on the analysis management screen 315.

### (Step S505)

When receiving the data presence inquiry (step S503), the data shaping unit 312 confirms whether the analysis target data is cached in the original data recording unit 301, the intermediate data recording unit 302, and the shaping completion data recording unit 303. Here, the data management unit 310 refers to the original data recording unit 301 and the intermediate data recording unit 302, and specifies a range of the analysis target data requiring access to the external data source 103 for each of the calibration period and the validation period.

In addition, in the case of this example, the analysis target data is not cached, and thus the data shaping unit 312 receives the data absence notification from each of the original data recording unit 301, the intermediate data recording unit 302, and the shaping completion data recording unit 303.

When receiving the data absence notification from each of the intermediate data recording unit 302 and the shaping completion data recording unit 303, the data shaping unit 312 returns the data absence notification to the data management unit 310.

### (Step S506)

The original data recording unit 301, the intermediate data recording unit 302, and the shaping completion data recording unit 303 confirm the presence or absence of the analysis target data in response to a request from the data shaping unit 312. In the case of this example, the analysis target data is not cached in any of the original data recording unit 301, the intermediate data recording unit 302, and the shaping completion data recording unit 303. Therefore, each of the original data recording unit 301, the intermediate data recording unit 302, and the shaping completion data recording unit 303 returns the data absence notification to the data shaping unit 312.

### (Step S507)

The data acquisition unit 311 executes analysis target acquisition processing 1. Specifically, for example, when receiving, from the data management unit 310, an acquisition request for analysis target data used for calibration from the data source 103, the data acquisition unit 311 accesses the data source 103 and acquires the analysis target data from the data source 103.

In this case, the data acquisition unit 311 divides the acquisition range of the original data into K pieces (K is an integer of 1 or more) according to the use acceptable to the data source 103, and transmits acquisition requests of the original data divided into K pieces (hereinafter, divided original data) to the data source 103. For example, in the case of distribution data, one physical quantity and a distribution amount at one time point in a predetermined latitude and longitude range including the river basin are one piece of original data. In addition, in the case of time-series data, for example, observation data for one observation point and one month of period is one piece of divided analysis target data.

### (Step S508)

The data source 103 executes request processing. Specifically, for example, the data source 103 acquires corresponding divided analysis target data for each of the acquisition requests of the divided analysis target data used for calibration from the data acquisition unit 311, and returns the divided analysis target data to the data acquisition unit 311.

### (Step S509)

The original data recording unit 301 records the divided original data from the data acquisition unit 311.

### (Step S510)

The data management unit 310 transmits a dummy data generation request to the dummy data generation unit 313. Specifically, for example, the data management unit 310 may transmit the dummy data generation request to the dummy data generation unit 313 in response to the operation of the input device 203 from the user 330. In addition, the data management unit 310 constructs the watershed model by using the divided analysis target data, but in a case where a shortage of the divided analysis target data necessary for constructing the watershed model is detected, a dummy data generation request may be transmitted to the dummy data generation unit 313 prior to acquisition of the insufficient divided analysis target data.

### (Step S511)

When receiving the dummy data generation request from the data management unit 310, the dummy data generation unit 313 generates dummy data and records the dummy data in the dummy data recording unit 304.

### (Step S512)

The dummy data recording unit 304 records the dummy data generated by the dummy data generation unit 313.

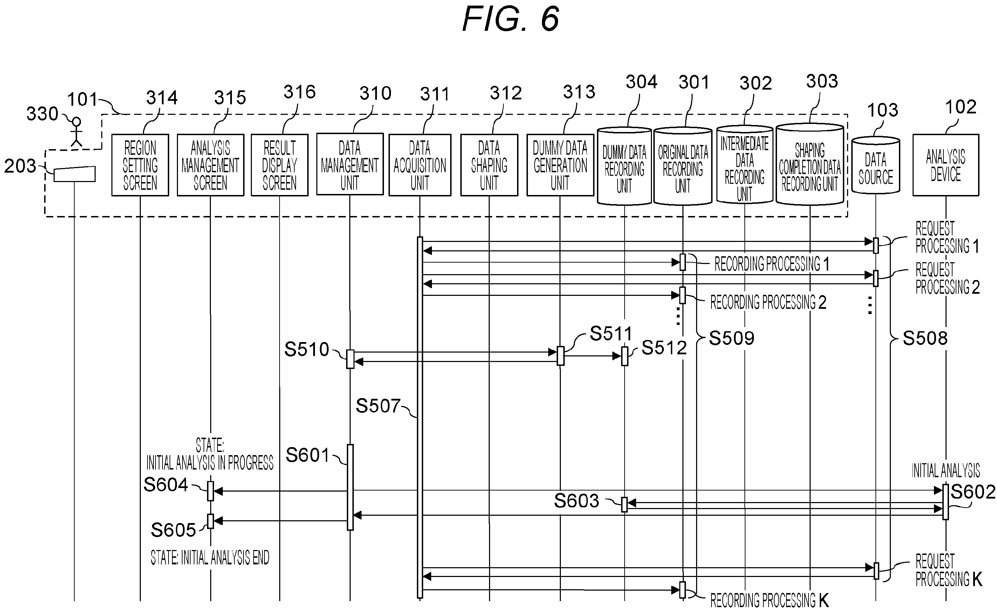

### <Fig. 6 Initial analysis sequence (no reused data)>

Fig. 6 is a sequence diagram illustrating an initial analysis sequence (no reused data). Note that, in the initial analysis, the presence of a watershed model including an analysis target, analysis target data for calibration, or dummy data thereof is a start condition of the initial analysis. In this example, it is assumed that the start condition is satisfied.

### (Step S601)

The data management unit 310 executes initial analysis request processing. In the initial analysis request processing, the data management unit 310 transmits an execution request of the initial analysis to the analysis device 102 at an arbitrary timing after the start of the execution of the data acquisition request processing. When receiving an end notification of the initial analysis from the analysis device 102, the data management unit 310 outputs the end notification of the initial analysis to the analysis management screen 315.

### (Step S602)

The analysis device 102 executes the initial analysis when receiving the execution request of the initial analysis from the data management unit 310. In addition, the analysis device 102 may read dummy data from the dummy data recording unit 304 and execute the initial analysis by using the dummy data. In the initial analysis (step S602), the analysis device 102 confirms the presence or absence of a defect associated with an input, which does not meet the assumption of the analysis device 102, such as a failure of a calculation result mainly due to missing of data or mixture of an unnatural value. By using the dummy data for the initial analysis (step S602), a standby time before calibration is shortened.

As illustrated in Fig. 6, the data acquisition of the data request sequence 1 (Fig. 5) is continued even during the execution of the initial analysis (step S601).

### (Step S603)

When there is an access from the analysis device 102, the dummy data recording unit 304 writes the dummy data to the analysis device 102.

### (Step S604)

The data output device 101 displays "initial analysis in progress" on the analysis management screen 315.

### (Step S605)

The data output device 101 displays "initial analysis end" on the analysis management screen 315.

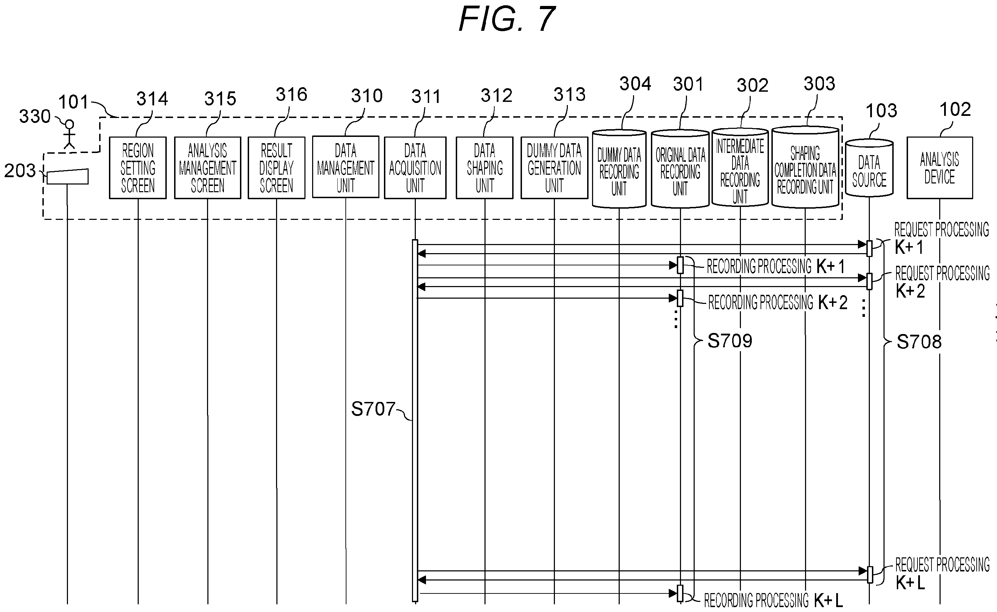

### <Fig. 7 Analysis target acquisition processing 2 (no reused data)>

Fig. 7 is a sequence diagram illustrating analysis target acquisition processing 2 (no reused data). The analysis target acquisition processing 2 (no reused data) is executed after the analysis target acquisition processing 1 (step S507). The analysis target acquisition processing 1 (step S507) is processing of acquiring analysis target data used for calibration, whereas the analysis target acquisition processing 2 is processing of acquiring analysis target data used for validation.

### (Step S707)

The data acquisition unit 311 executes the analysis target acquisition processing 2. Specifically, for example, when the analysis target acquisition processing 1 ends, the data acquisition unit 311 accesses the data source 103 and acquires the analysis target data from the data source 103.

In this case, the data acquisition unit 311 divides the acquisition range of the original data used for validation into L pieces (L is an integer of 1 or more) according to the use acceptable to the data source 103, and transmits acquisition requests of the L pieces of divided analysis target data to the data source 103.

### (Step S708)

The data source 103 executes request processing. Specifically, for example, the data source 103 acquires corresponding divided original data for each of the divided original data acquisition requests from the data acquisition unit 311, and returns the divided original data to the data acquisition unit 311.

### (Step S709)

The original data recording unit 301 records the divided original data from the data acquisition unit 311.

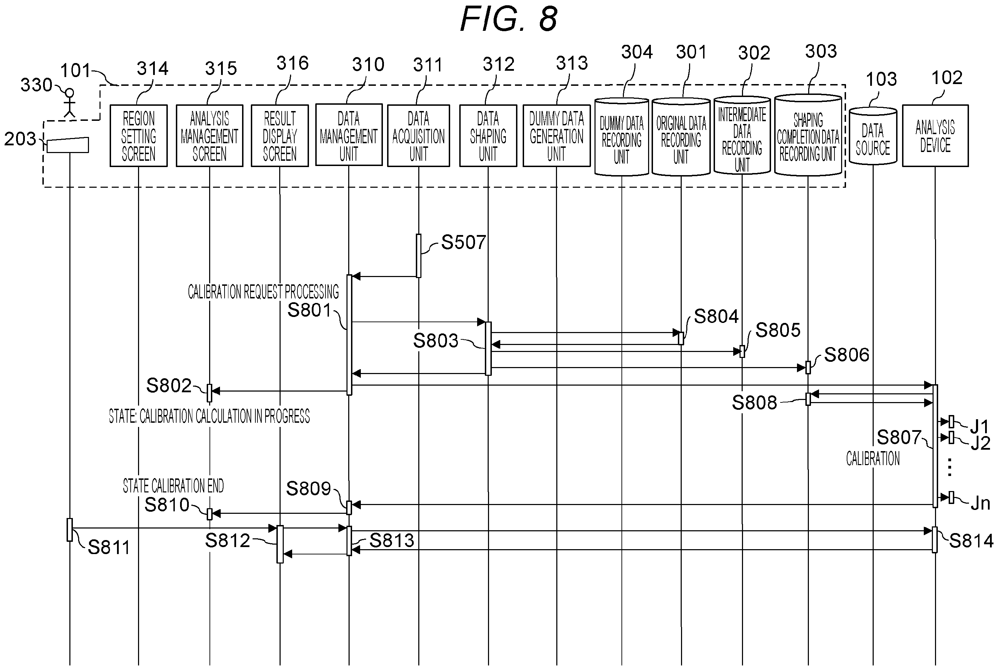

### <Fig. 8 Sequence of data shaping and calibration (no reused data)>

Fig. 8 is a sequence diagram illustrating a sequence of data shaping and calibration (no reused data). Note that, in the calibration, having the watershed model and the analysis target data for calibration is a start condition of the calibration. In the case of this example, it is assumed that the start condition is satisfied.

### (Step S801)

When receiving the end notification of the analysis target acquisition processing 1 (step S507) from the data acquisition unit 311, the data management unit 310 executes calibration request processing. In the calibration request processing, the data management unit 310 transmits a data shaping request for calibration to the data shaping unit 312. Next, when receiving the completion notification of the data shaping for calibration from the data shaping unit 312, the data management unit 310 transmits a calibration request to the analysis device 102. In addition, the data management unit 310 outputs, to the analysis management screen 315, a notification indicating that calibration calculation is in progress.

### (Step S802)

The data output device 101 displays "calibration calculation in progress" on the analysis management screen 315.

### (Step S803)

When receiving the data shaping request for calibration from the data management unit 310, the data shaping unit 312 executes data shaping processing for calibration. Specifically, for example, the data shaping unit 312 reads original data from the original data recording unit 301, generates intermediate data, and records the intermediate data in the intermediate data recording unit 302. When the recording of the intermediate data ends, the data shaping unit 312 transmits a completion notification of the data shaping for calibration to the data management unit 310.

### (Step S804)

When receiving a read request of the original data from the data shaping unit 312, the original data recording unit 301 writes the original data to the data shaping unit 312.

### (Step S805)

When receiving a write request of the intermediate data from the data shaping unit 312, the intermediate data recording unit 302 writes the intermediate data from the data shaping unit 312 to the data shaping unit 312.

### (Step S806)

When receiving the write request of the shaping completion data from the data shaping unit 312, the shaping completion data recording unit 303 writes the shaping completion data from the data shaping unit 312 to the data shaping unit 312.

### (Step S807)

When receiving the calibration request from the data management unit 310, the analysis device 102 executes calibration after the initial analysis ends. The calibration (step S807) is executed by using not the dummy data but the shaping completion data read from the shaping completion data recording unit 303 as the analysis target data for calibration.

In addition, in the calibration (step S807), unlike the initial analysis and the validation, the analysis device 102 executes, for the same period, a large number of analysis jobs J1 to Jn (n is an integer of 1 or more) in which model parameters of the watershed model have been changed, and decides optimal (for example, an error with the observation data is minimized) model parameters. Accordingly, it is possible to reduce the standby time of the analysis target data for validation. When the analysis jobs J1 to Jn end, the analysis device 102 transmits a calibration end notification to the data management unit 310.

### (Step S808)

When there is a read request of the shaping completion data from the analysis device 102, the shaping completion data recording unit 303 writes the shaping completion data to the analysis device 102.

### (Step S809)

When receiving the calibration end notification from the analysis device 102, the data management unit 310 outputs the calibration end notification to the analysis management screen 315.

### (Step S810)

The data output device 101 displays "calibration end" on the analysis management screen 315.

### (Step S811)

The data output device 101 receives the confirmation of calibration end by the operation of the input device 203 from the user 330.

### (Step S812)

When receiving the confirmation of calibration end, the data output device 101 executes calibration result visualization processing. Specifically, for example, the data output device 101 sends a calibration result visualization request to the data management unit 310 and acquires a calibration result from the data management unit 310. Then, the data output device 101 displays the calibration result on the result display screen 316.

### (Step S813)

When receiving the calibration result visualization request, the data management unit 310 transmits a calibration result acquisition request to the analysis device 102. Then, the data management unit 310 acquires the calibration result from the analysis device 102. When acquiring the calibration result from the analysis device 102, the data management unit 310 transmits the calibration result to the data management unit 310.

### (Step S814)

When receiving the calibration result acquisition request from the data management unit 310, the analysis device 102 returns the calibration result to the data management unit 310.

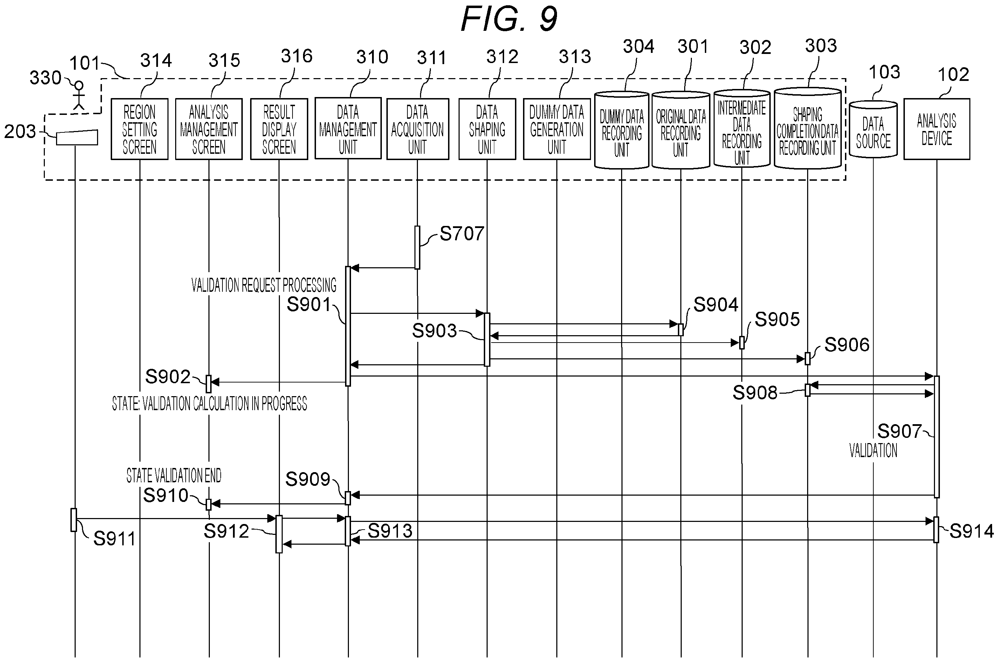

### <Fig. 9 Sequence of data shaping and validation (no reused data)>

Fig. 9 is a sequence diagram illustrating a sequence of data shaping and validation (no reused data). Note that, in the validation, having the watershed model, the analysis target data for calibration, and the analysis target data for validation is a start condition of the validation. In the case of this example, it is assumed that the start condition is satisfied.

### (Step S901)

When receiving the end notification of the analysis target acquisition processing 2 (step S707) from the data acquisition unit 311, the data management unit 310 executes validation request processing. In the validation request processing, the data management unit 310 transmits a data shaping request for validation to the data shaping unit 312. Next, when receiving the completion notification of the data shaping for validation from the data shaping unit 312, the data management unit 310 transmits a validation request to the analysis device 102. In addition, the data management unit 310 outputs, to the analysis management screen 315, a notification indicating that validation calculation is in progress.

### (Step S902)

The data output device 101 displays "validation calculation in progress" on the analysis management screen 315.

### (Step S903)

When receiving the data shaping request for validation from the data management unit 310, the data shaping unit 312 executes data shaping processing for validation. Specifically, for example, the data shaping unit 312 reads original data from the original data recording unit 301, generates intermediate data, and records the intermediate data in the intermediate data recording unit 302. When the recording of the intermediate data ends, the data shaping unit 312 transmits a completion notification of the data shaping for validation to the data management unit 310.

### (Step S904)

When receiving a read request of the original data from the data shaping unit 312, the original data recording unit 301 writes the original data to the data shaping unit 312.

### (Step S905)

When receiving a write request of the intermediate data from the data shaping unit 312, the intermediate data recording unit 302 writes the intermediate data from the data shaping unit 312 to the data shaping unit 312.

### (Step S906)

When receiving the write request of the shaping completion data from the data shaping unit 312, the shaping completion data recording unit 303 writes the shaping completion data from the data shaping unit 312 to the data shaping unit 312.

### (Step S907)

When receiving the validation request from the data management unit 310, the analysis device 102 executes validation after the initial analysis ends. The validation (step S907) is executed by using not the dummy data but the shaping completion data read from the shaping completion data recording unit 303 as the analysis target data for validation. When the validation ends, the analysis device 102 transmits a validation end notification to the data management unit 310.

### (Step S908)

When there is a read request of the shaping completion data from the analysis device 102, the shaping completion data recording unit 303 writes the shaping completion data to the analysis device 102.

### (Step S909)

When receiving the validation end notification from the analysis device 102, the data management unit 310 outputs the validation end notification to the analysis management screen 315.

### (Step S910)

The data output device 101 displays "validation end" on the analysis management screen 315.

### (Step S911)

The data output device 101 receives the confirmation of validation end by the operation of the input device 203 from the user 330.

### (Step S912)

When receiving the confirmation of validation end, the data output device 101 executes validation result visualization processing. Specifically, for example, the data output device 101 sends a validation result visualization request to the data management unit 310 and acquires a validation result from the data management unit 310. Then, the data output device 101 displays the validation result on the result display screen 316.

### (Step S913)

When receiving the validation result visualization request, the data management unit 310 transmits a validation result acquisition request to the analysis device 102. Then, the data management unit 310 acquires the validation result from the analysis device 102. When acquiring the validation result from the analysis device 102, the data management unit 310 transmits the validation result to the data management unit 310.

### (Step S914)

When receiving the validation result acquisition request from the data management unit 310, the analysis device 102 returns the validation result to the data management unit 310.

### <Fig. 10 Data request sequence 1 (with reused data)>

Fig. 10 is a sequence diagram illustrating the data request sequence 1 (with reused data).

### (Step S1001)

The data output device 101 receives, as analysis conditions regarding the natural environment, selection of an analysis target river and input of an analysis target period by the operation of the input device 203 from the user 330.

### (Step S1002)

The data output device 101 displays the analysis target river and the analysis target period, and transmits the analysis target river and the analysis target period to the data management unit 310. In this example, the analysis target river is set as "Tokachi River", and the analysis target period is set as "2004 to 2022".

### (Step S1003)

The data management unit 310 executes data acquisition request processing. In the data acquisition request processing, the data management unit 310 specifies one or more analysis target observation points on the analysis target river and transmits a data presence inquiry to the data shaping unit 312. In the case of this example, the analysis target data (reused data) corresponding to the analysis target observation points "A, B, C (of Tokachi River)" and the analysis target period "2004 to 2014" are cached in the original data recording unit 301, the intermediate data recording unit 302, and the shaping completion data recording unit 303. Therefore, the data management unit 310 receives the data presence notification from the data shaping unit 312.

Since there is the reused data, the data management unit 310 transmits, to the data acquisition unit 311, an acquisition request for map data and weather data (original data) corresponding to the analysis target observation points "A, B, C (of Tokachi River)" and the analysis target period "2004 to 2014 " from the data source 103. Then, the data management unit 310 outputs, to the analysis management screen 315, a notification indicating that data acquisition is in progress.

### (Step S1004)

The data output device 101 displays "data acquisition in progress" on the analysis management screen 315.

### (Step S1005)

When receiving the data presence inquiry (step S1003), the data shaping unit 312 confirms whether the analysis target data is cached in the original data recording unit 301, the intermediate data recording unit 302, and the shaping completion data recording unit 303. Here, the data management unit 310 refers to the original data recording unit 301 and the intermediate data recording unit 302, and specifies a range of the analysis target data requiring access to the external data source 103 for each of the calibration period and the validation period.

In addition, in the case of this example, the analysis target data is cached, and thus the data shaping unit 312 receives the data presence notification from each of the original data recording unit 301, the intermediate data recording unit 302, and the shaping completion data recording unit 303.

When receiving the data presence notification from each of the intermediate data recording unit 302 and the shaping completion data recording unit 303, the data shaping unit 312 returns the data presence notification to the data management unit 310.

### (Step S1006)

The original data recording unit 301, the intermediate data recording unit 302, and the shaping completion data recording unit 303 confirm the presence or absence of the analysis target data in response to a request from the data shaping unit 312. In the case of this example, the analysis target data is cached in the original data recording unit 301, the intermediate data recording unit 302, and the shaping completion data recording unit 303. Therefore, each of the original data recording unit 301, the intermediate data recording unit 302, and the shaping completion data recording unit 303 returns the data presence notification to the data shaping unit 312.

### (Step S1007)

The data acquisition unit 311 executes analysis target acquisition processing 1. Specifically, for example, when receiving, from the data management unit 310, an acquisition request for original data used for calibration from the data source 103, the data acquisition unit 311 accesses the data source 103 and acquires the original data from the data source 103.

In this case, the data acquisition unit 311 divides the acquisition range of the original data into M pieces (M is an integer of 1 or more) according to the use acceptable to the data source 103, and transmits acquisition requests of the divided original data divided into K pieces to the data source 103. For example, in the case of distribution data, one physical quantity and a distribution amount at one time point in a predetermined latitude and longitude range including the river basin are one piece of original data. In addition, in the case of time-series data, for example, observation data for one observation point and one month of period is one piece of divided analysis target data.

### (Step S1008)

The data source 103 executes request processing. Specifically, for example, the data source 103 acquires corresponding divided original data for each of the acquisition requests of the divided original data used for calibration from the data acquisition unit 311, and returns the divided original data to the data acquisition unit 311.

### (Step S1009)

The original data recording unit 301 records the divided original data from the data acquisition unit 311.

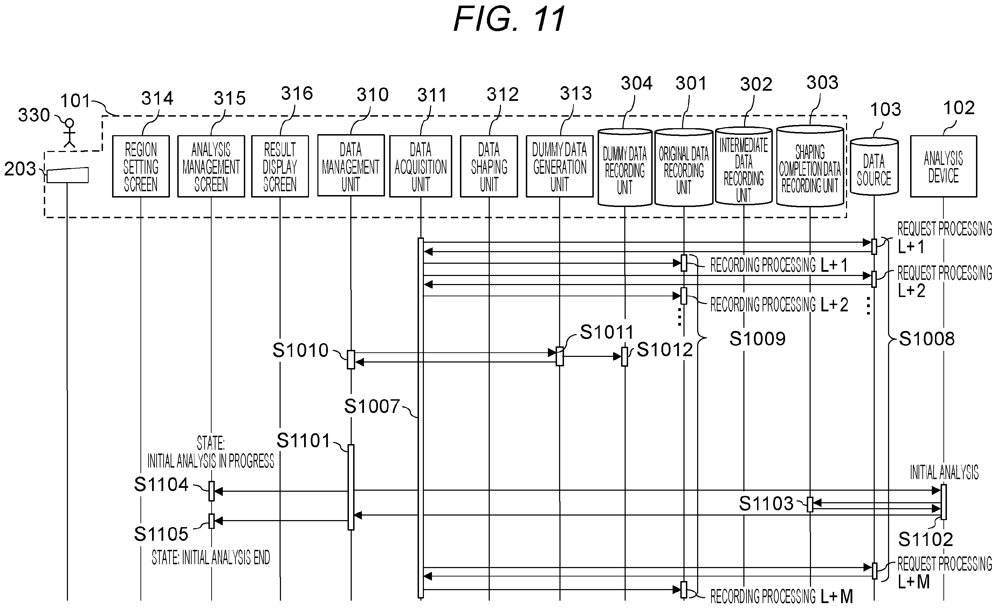

### <Fig. 11 Initial analysis sequence (with reused data)>

Fig. 11 is a sequence diagram illustrating the initial analysis sequence (with reused data). Note that, in the initial analysis, the presence of a watershed model including an analysis target, analysis target data for calibration, or dummy data thereof is a start condition of the initial analysis. In this example, it is assumed that the start condition is satisfied.

### (Step S1101)

The data management unit 310 executes initial analysis request processing. In the initial analysis request processing, the data management unit 310 transmits an execution request of the initial analysis to the analysis device 102 at an arbitrary timing after the start of the execution of the data acquisition request processing. When receiving an end notification of the initial analysis from the analysis device 102, the data management unit 310 outputs the end notification of the initial analysis to the analysis management screen 315.

### (Step S1102)

The analysis device 102 executes the initial analysis when receiving the execution request of the initial analysis from the data management unit 310. In addition, the analysis device 102 reads shaping completion data from the shaping completion data recording unit 303 and executes the initial analysis by using the shaping completion data.

As illustrated in Fig. 11, the data acquisition of the data request sequence 1 (Fig. 10) is continued even during the execution of the initial analysis (step S1101).

### (Step S1103)

When there is an access from the analysis device 102, the shaping completion data recording unit 303 writes the shaping completion data to the analysis device 102.

### (Step S1104)

The data output device 101 displays "initial analysis in progress" on the analysis management screen 315.

### (Step S1105)

The data output device 101 displays "initial analysis end" on the analysis management screen 315.

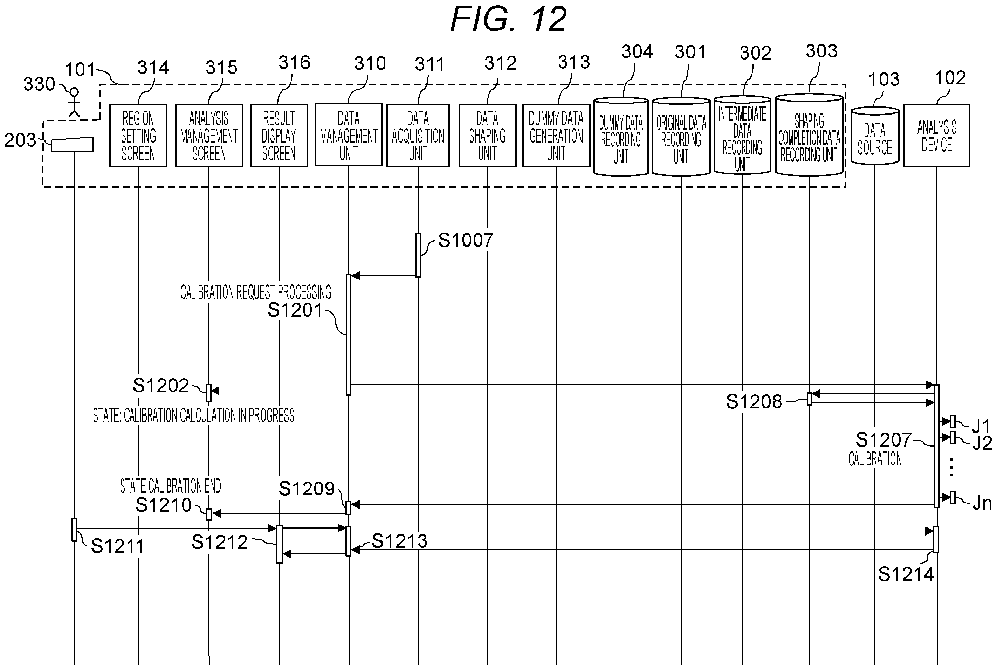

### <Fig. 12 Calibration sequence (with reused data)>

Fig. 12 is a sequence diagram illustrating the calibration sequence (with reused data). Note that, in the calibration, having the watershed model and the analysis target data for calibration is a start condition of the calibration. In the case of this example, it is assumed that the start condition is satisfied.

### (Step S1201)

When receiving the end notification of the analysis target acquisition processing 1 (step S1007) from the data acquisition unit 311, the data management unit 310 executes calibration request processing. In the calibration request processing, the data management unit 310 transmits a calibration request to the analysis device 102. In addition, the data management unit 310 outputs, to the analysis management screen 315, a notification indicating that calibration calculation is in progress.

### (Step S1202)

The data output device 101 displays "calibration calculation in progress" on the analysis management screen 315.

### (Step S1208)

When there is a read request of the shaping completion data from the analysis device 102, the shaping completion data recording unit 303 writes the shaping completion data to the analysis device 102.

### (Step S1209)

When receiving the calibration end notification from the analysis device 102, the data management unit 310 outputs the calibration end notification to the analysis management screen 315.

### (Step S1210)

The data output device 101 displays "calibration end" on the analysis management screen 315.

### (Step S1211)

The data output device 101 receives the confirmation of calibration end by the operation of the input device 203 from the user 330.

### (Step S1212)

When receiving the confirmation of calibration end, the data output device 101 executes calibration result visualization processing. Specifically, for example, the data output device 101 sends a calibration result visualization request to the data management unit 310 and acquires a calibration result from the data management unit 310. Then, the data output device 101 displays the calibration result on the result display screen 316.

### (Step S1213)

When receiving the calibration result visualization request, the data management unit 310 transmits a calibration result acquisition request to the analysis device 102. Then, the data management unit 310 acquires the calibration result from the analysis device 102. When acquiring the calibration result from the analysis device 102, the data management unit 310 transmits the calibration result to the data management unit 310.

### (Step S1214)

When receiving the calibration result acquisition request from the data management unit 310, the analysis device 102 returns the calibration result to the data management unit 310.

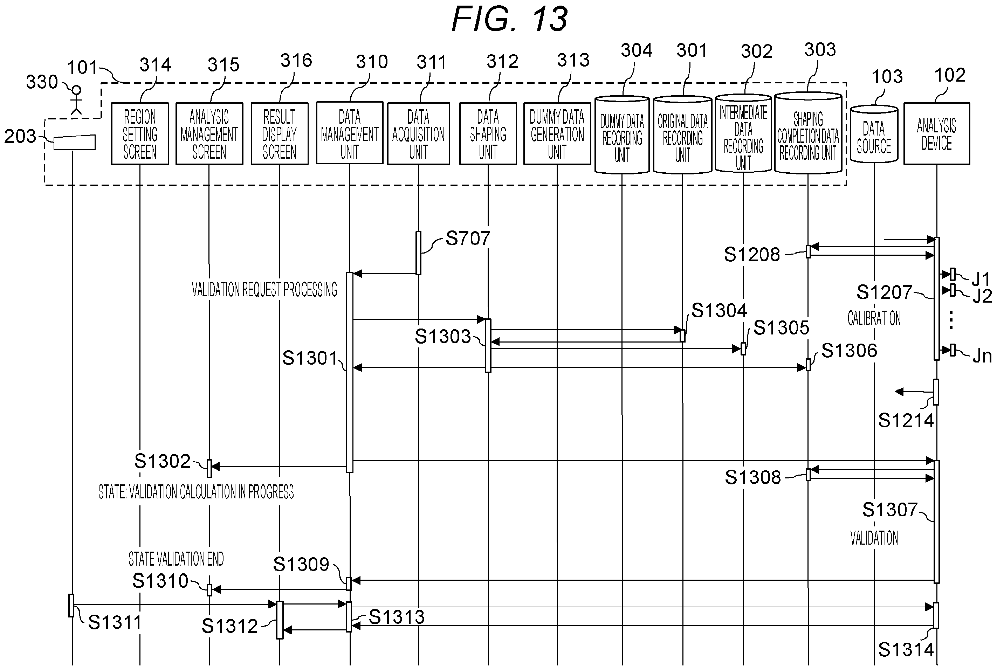

### <Fig. 13 Validation sequence (with reused data)>

Fig. 13 is a sequence diagram illustrating the validation sequence (with reused data). Note that, in the validation, having the watershed model, the analysis target data for calibration, and the analysis target data for validation is a start condition of the validation. In the case of this example, it is assumed that the start condition is satisfied.

### (Step S1301)

When receiving the end notification of the analysis target acquisition processing 2 (step S707) from the data acquisition unit 311, the data management unit 310 executes validation request processing. In the validation request processing, the data management unit 310 transmits a data shaping request for validation to the data shaping unit 312. Next, when receiving the completion notification of the data shaping for validation from the data shaping unit 312, the data management unit 310 transmits a validation request to the analysis device 102. In addition, the data management unit 310 outputs, to the analysis management screen 315, a notification indicating that validation calculation is in progress.

### (Step S1302)

The data output device 101 displays "validation calculation in progress" on the analysis management screen 315.

### (Step S1303)

When receiving the data shaping request for validation from the data management unit 310, the data shaping unit 312 executes data shaping processing for validation. Specifically, for example, the data shaping unit 312 reads original data from the original data recording unit 301, generates intermediate data, and records the intermediate data in the intermediate data recording unit 302. When the recording of the intermediate data ends, the data shaping unit 312 transmits a completion notification of the data shaping for validation to the data management unit 310.

### (Step S1304)

When receiving a read request of the original data from the data shaping unit 312, the original data recording unit 301 writes the original data to the data shaping unit 312.

### (Step S1305)

When receiving a write request of the intermediate data from the data shaping unit 312, the intermediate data recording unit 302 writes the intermediate data from the data shaping unit 312 to the data shaping unit 312.

### (Step S1306)

When receiving the write request of the shaping completion data from the data shaping unit 312, the shaping completion data recording unit 303 writes the shaping completion data from the data shaping unit 312 to the data shaping unit 312.

### (Step S1307)

When receiving the validation request from the data management unit 310, the analysis device 102 executes validation after the initial analysis ends. The validation (step S1307) is executed by using not the dummy data but the shaping completion data read from the shaping completion data recording unit 303 as the analysis target data for validation. When the validation ends, the analysis device 102 transmits a validation end notification to the data management unit 310.

### (Step S1308)

When there is a read request of the shaping completion data from the analysis device 102, the shaping completion data recording unit 303 writes the shaping completion data to the analysis device 102.

### (Step S1309)

When receiving the validation end notification from the analysis device 102, the data management unit 310 outputs the validation end notification to the analysis management screen 315.

### (Step S1310)

The data output device 101 displays "validation end" on the analysis management screen 315.

### (Step S1311)

The data output device 101 receives the confirmation of validation end by the operation of the input device 203 from the user 330.

### (Step S1312)

When receiving the confirmation of validation end, the data output device 101 executes validation result visualization processing. Specifically, for example, the data output device 101 sends a validation result visualization request to the data management unit 310 and acquires a validation result from the data management unit 310. Then, the data output device 101 displays the validation result on the result display screen 316.

### (Step S1313)

When receiving the validation result visualization request, the data management unit 310 transmits a validation result acquisition request to the analysis device 102. Then, the data management unit 310 acquires the validation result from the analysis device 102. When acquiring the validation result from the analysis device 102, the data management unit 310 transmits the validation result to the data management unit 310.

### (Step S1314)

When receiving the validation result acquisition request from the data management unit 310, the analysis device 102 returns the validation result to the data management unit 310.

In the examples of Figs. 10 to 13, the analysis is performed with the analysis target period partially shifted, and thus the shaping completion data of the previous time (Figs. 5 to 9) can be reused for the initial analysis and the calibration. Therefore, the initial analysis and calibration can be started without waiting for data acquisition. In addition, in the validation, the analysis target period is extended to the year 2022. Therefore, the data output device 101 can additionally acquire the original data for the period and update the intermediate data and the shaping completion data. In addition, in a case where the additional acquisition of the analysis target data for validation is completed in parallel with the calibration, validation can be executed immediately after the calibration is completed.

### [Screen display example]

Next, display examples of the region setting screen 314, the analysis management screen 315, and the result display screen 316 described above will be described.

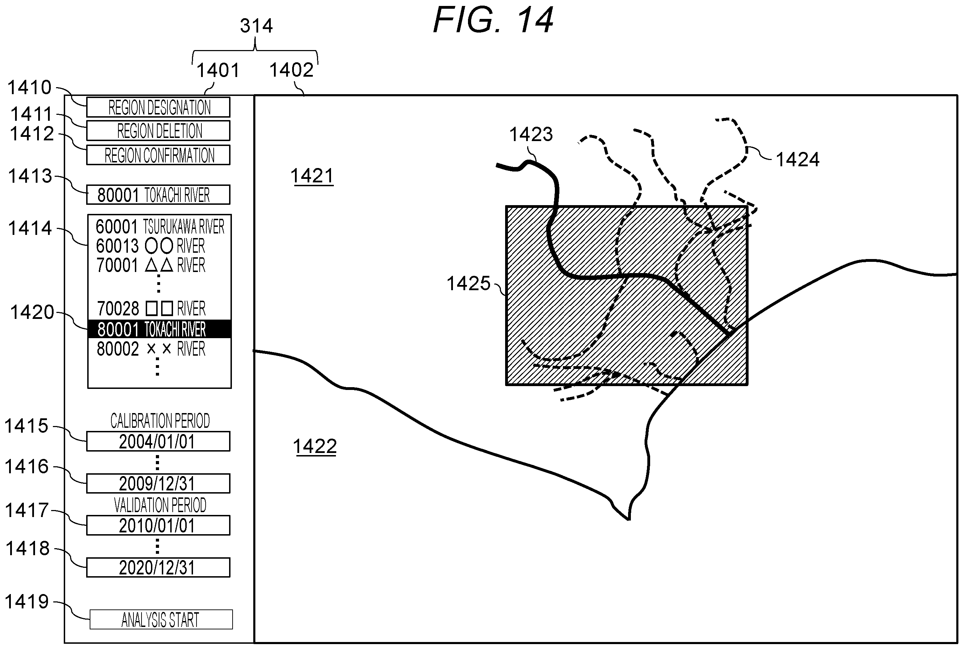

### <Fig. 14 Region setting screen 314>

Fig. 14 is an explanatory diagram illustrating a display example of the region setting screen 314. The region setting screen 314 includes a setting region 1401 and a map display region 1402. The setting region 1401 includes a region designation button 1410, a region deletion button 1411, a region confirmation button 1412, a selected river display field 1413, a candidate river name list 1414, a calibration start date input field 1415, a calibration end date input field 1416, a validation start date input field 1417, a validation end date input field 1418, and an analysis start button 1419.

The region designation button 1410 is a user interface for enabling region designation in the map display region 1402 by the input device 203.

The region deletion button 1411 is a user interface for deleting a region (designated region 1425) designated in the map display region 1402 by the input device 203.

The region confirmation button 1412 is a user interface for confirming the designated region 1425.

The selected river display field 1413 is a region where the input device 203 displays the name of the river (selected river) selected from the candidate river name list 1414 by a cursor 1420.

The candidate river name list 1414 is a list that displays the names of the rivers included in the designated region 1425.

The calibration start date input field 1415 is a region for receiving an input of a calibration start date by the input device 203.

The calibration end date input field 1416 is a region for receiving an input of a calibration end date by the input device 203.

The validation start date input field 1417 is a region for receiving an input of a validation start date by the input device 203.

The validation end date input field 1418 is a region for receiving an input of the validation end date by the input device 203.

The analysis start button 1419 is a user interface for starting execution of analysis (initial analysis, calibration, validation) in the region confirmed by the region confirmation button 1412.

The cursor 1420 is a user interface for selecting a river name from the candidate river name list 1414 by the input device 203.

The map display region 1402 is a region for displaying a map. In the example of Fig. 14, a land 1421 and a sea 1422 are displayed. In addition, a river is displayed on the land 1421. A thick line river 1423 is the river selected by the cursor 1420, and a dotted line river 1424 is the river (excluding the selected river) in the candidate river name list 1414. The designated region 1425 is a rectangular region designated by the input device 203.

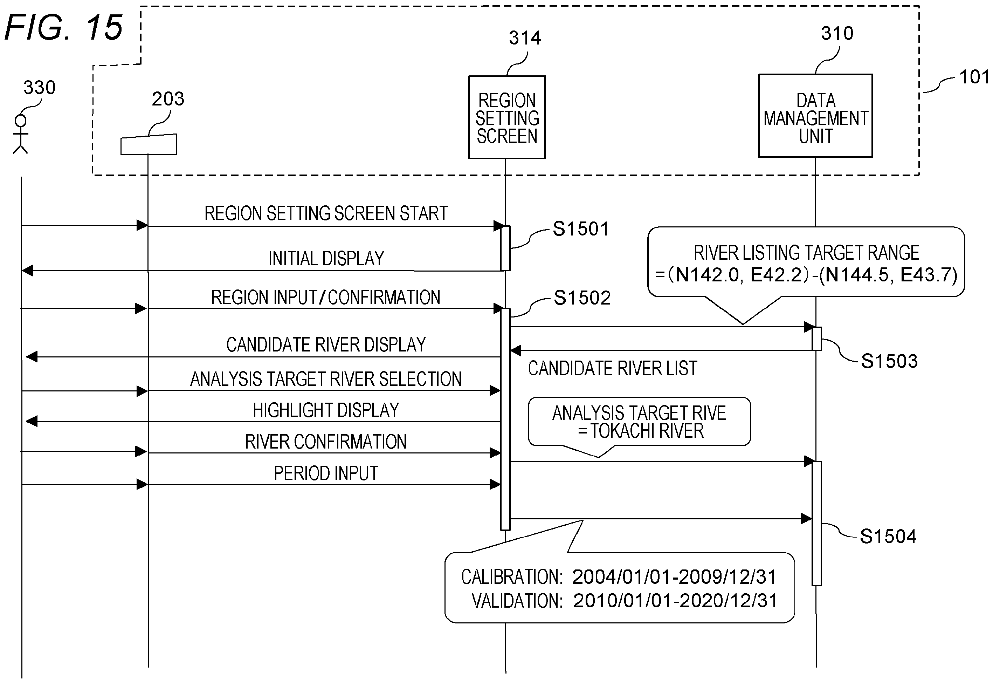

### <Fig. 15 Selection sequence of analysis target river>

Fig. 15 is a sequence diagram illustrating a selection sequence of the analysis target river.

### (Step S1501)

When the user 330 accesses the region setting screen 314 by the input device 203, the data output device 101 initially displays a scrollable and zoomable map in the map display region 1402. The data output device 101 displays the region of interest of the user 330 in the map display region 1402 by the operation of the input device 203 by the user 330.

### (Step S1502)

The data output device 101 draws a rectangle to be analyzed in the map display region 1402 by the operation of the input device 203 by the user 330. The drawn rectangle is the designated region 1425. When the designated region 1425 is drawn, the candidate river name list 1414, which is a list of river names in the designated region 1425, is displayed in the setting region 1401.

The data output device 101 receives the selection of an analysis target river from the candidate river name list 1414 by the operation of the input device 203 by the user 330. The selected river is highlighted in the map display region 1402. In Fig. 14, the selected river 1423 is indicated by a thick line.

When detecting the pressing of the region confirmation button 1412 by the operation of the input device 203 by the user 330, the data output device 101 confirms the analysis target river as the selected river 1423 and outputs the selected river 1423 to the data management unit 310.

When receiving the input of the date in the calibration start date input field 1415, the calibration end date input field 1416, the validation start date input field 1417, and the validation end date input field 1418 by the operation of the input device 203 by the user 330, the data output device 101 outputs the calibration period and the validation period to the data management unit 310.

### (Step S1503)

When receiving the designated region 1425 from the region setting screen 314, the data management unit 310 searches a list of rivers included in the designated region 1425 from a river data table in the data management information recording unit 300, and acquires the candidate river name list 1414 as a search result. The candidate river name list 1414 is displayed in the setting region 1401.

### (Step S1504)

When receiving the analysis target river, the calibration period, and the validation period, the data management unit 310 transmits a data presence inquiry including one or more analysis target observation points on the analysis target river and the analysis target period (calibration period and validation period) to the data shaping unit 312 (steps S503 and S1003).

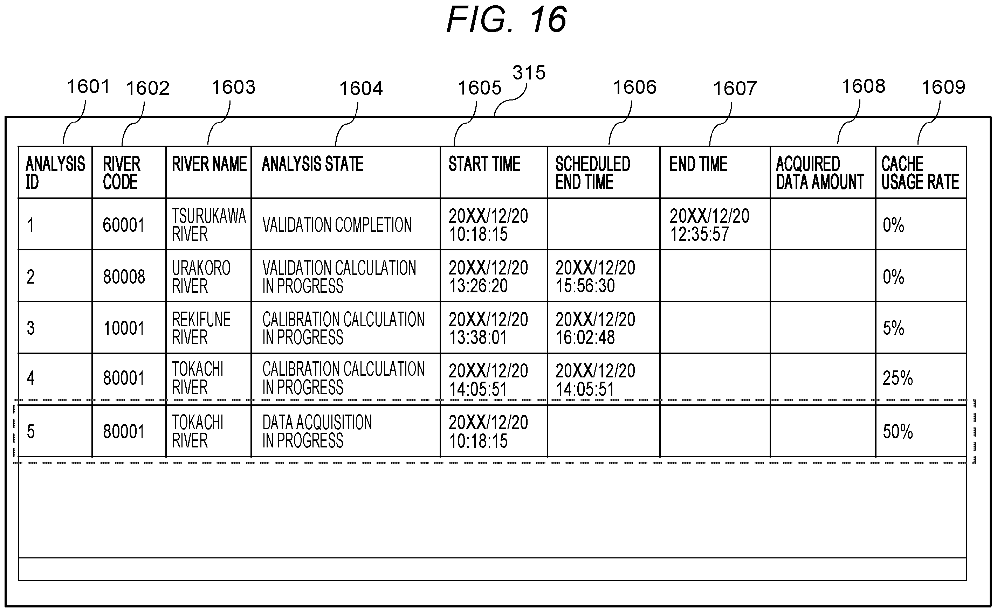

### <Fig. 16 Analysis management screen 315>

Fig. 16 is an explanatory diagram illustrating a display example of the analysis management screen 315. The analysis management screen 315 includes an analysis ID 1601, a river code 1602, a river name 1603, an analysis state 1604, a start time 1605, a scheduled end time 1606, an end time 1607, an acquired data amount 1608, and a cache usage rate 1609.

The analysis ID 1601 is identification information that uniquely specifies the analysis (initial analysis, calibration, and validation). The river code 1602 is identification information that uniquely specifies a river. The river name 1603 is a name of a river.

The analysis state 1604 indicates a state of analysis. The analysis state 1604 is output from the data management unit 310 (steps S504, S604, S605, S802, S810, S902, S910, S1004, S1104, S1105, S1202, S1210, S1302, and S1310) .

The start time 1605 is a date and time when the analysis specified in the analysis state 1604 is started. The scheduled end time 1606 is a scheduled date and time when the analysis specified in the analysis state 1604 ends. The end time 1607 is a date and time when the analysis specified in the analysis state 1604 ends.

The acquired data amount 1608 is an amount of data (original data, intermediate data, and shaping completion data) acquired from the external data source 103 in the analysis (initial analysis, calibration, and validation). The cache usage rate 1609 is a usage rate at which the amount of the reused data used from the original data recording unit 301, the intermediate data recording unit 302, and the shaping completion data recording unit 303 occupies the acquired data amount 1608.

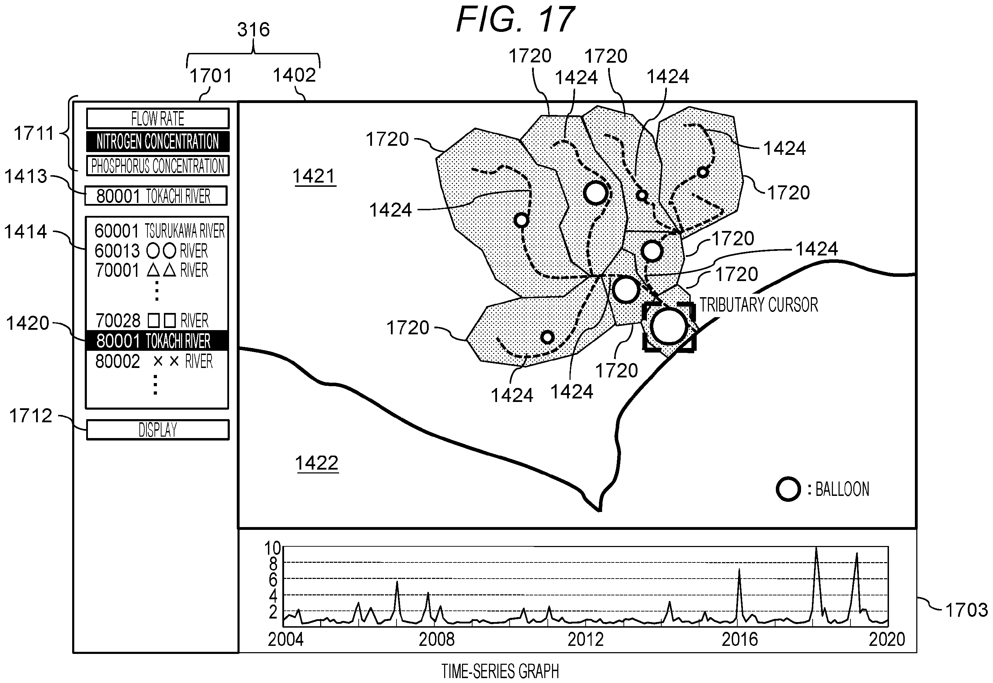

### <Fig. 17 Result display screen>

Fig. 17 is an explanatory diagram illustrating a display example of the result display screen 316. The result display screen 316 reads data of the river water quality for which calculation has been completed, and visualizes the read data together with a river flow path and a watershed range on the map. The result display screen 316 includes a selection region 1701, a map display region 1402, and a graph display region 1703.

The selection region 1701 includes a selection button 1711, a candidate river name list 1414, and a display button 1712. The selection button 1711 is a user interface for selecting a type (in this example, a flow rate, a nitrogen concentration, or a phosphorus concentration) of analysis result. Fig. 17 illustrates that the nitrogen concentration is selected.

The graph display region 1703 is a region for displaying a graph of time-series data. A horizontal axis represents time, and a vertical axis represents the quantity of the type of analysis result selected by the selection button 1711.

In the map display region 1402, a watershed range 1720 indicated by a closed region of a polygonal line including the river 1424 is displayed. A white circular shape is a balloon representing the quantity of the type (in this example, the nitrogen concentration) of analysis result selected by the selection button 1711. The larger the circle, the higher the nitrogen concentration contained in the water of the river 1424.

Note that, in the above-described embodiment, the minimum necessary configuration for distinguishing between dummy data generation and actual data acquisition has been shown. By making it possible to designate the use of the dummy data and the actual data in more detail, it is expected that efficiency can be improved in progressing with the analysis over a plurality of rivers and a plurality of periods even in the target region.

In addition, in the above-described embodiment, only two categories of the calibration period and the validation period are provided, but in more detail, the data output device 101 may confirm the presence or absence of data in the intermediate data recording unit 302 every year for each location of the observation point. Then, the data output device 101 may apply any of the following four classifications (1) to (4) to the dummy data generation on the basis of the confirmation result.
(1) Generate dummy data by using dummy data generation unit 313: inaccurate, but minimum analysis time
(2) Generate half dummy data in which intermediate data and dummy data are mixed: slightly inaccurate, but analysis time is short. This case may be useful when the analysis target period or the analysis target region is changed.
(3) Shape data by using recorded intermediate data: accurate, and short time. However, it is required that the data has been analyzed at least once previously.
(4) Access external data source 103 to prepare input data: accurate, but analysis time is longest.

For example, the data output device 101 may determine which quality of above (1) to (4) the analysis target data is to be generated to have, on the basis of the request of a priority between the data quality and the analysis time requested by the analysis jobs J1 to Jn in the calibration.

As these extreme cases, the data output device 101 may apply (1) or (2) in the initial analysis, and (3) or (4) in the calibration or validation. Since the intermediate data and the dummy data can be generated in (2) which is an intermediate state, an increase in the speed of initial analysis when new observation point data is required due to a difference in a watershed range can be expected in the case of analyzing a neighboring region of a river for which data has been acquired.

In addition, until waiting for completion of acquisition of newly necessary observation point data, the data output device 101 can start the initial analysis in a state of reusing acquired data for calibration or validation and filling missing portions with dummy data. Since the reproduction accuracy of events in the real world is not required in the initial analysis, there is no problem even if such weather data is input in which dummy data and measured values are mixed.

In addition, in the above-described embodiment, it is assumed that time-series data, typically, the observation data of the weather observation point is used as an input of the analysis device 102. Unlike this case, the data output device 101 may input the distribution data to the analysis device 102 after predetermined conversion. In the case of the river basin model, the data output device 101 representatively inputs three types of distribution data of topography data, land use data, and soil data. All of these distribution data are generated on the basis of interpretation of a surveyed map, discrimination of image data such as satellite images and aerial photographs, and elevation data measured by a radar such as a synthetic aperture radar (SAR).

In the case of these data formats, in addition to direct use, the data output device 101 may identify an attribute of a subject of each pixel on the basis of characteristics such as spectral distribution and regularity of shape patterns, and output a classification result of farmland, forests, urban areas, or the like by discrimination processing based on a learning device. In this case, the data output device 101 may execute the discrimination processing based on a learning device in addition to the acquisition of external data and the format conversion, and convert unprocessed distribution data into discriminated distribution data.

As described above, in an analysis case in which the processing amount of the distribution data is relatively large (the proportion of the processing time is large), a method can be considered in which the data output device 101 records the discrimination result data by the learning device in the intermediate data recording unit 302 and reuses the discrimination result data. In this case, in addition to the management of the unacquired data, the acquired data, and the dummy data, the data output device 101 may provide and manage undiscriminated and discriminated sections or may replace the unacquired or undiscriminated data with the dummy data and start the analysis job.

As described above, the data output device 101 arranged between the data source 103 and the analysis device 102 reduces a difference in data format between the data source 103 and the analysis device 102 by data shaping. The data output device 101 uses the following three approaches in combination.
(1) Sequentially download analysis target data of region of interest designated by user 330 and accumulate accumulation target data in cache
(2) Execute data shaping processing (conversion of mesh , time-series and conversion of file format) of analysis target data in parallel with analysis preparation work.
(3) The analysis device 102 uses rough and incomplete data (dummy data) at the time of initial analysis (test run), and executes this analysis (calibration, validation) after all data shaping is completed. At this time, it is desirable that the order of points for the time-series data generation is not limited to a sequential order from an end and can be randomized.

Accordingly, the data output device 101 can reduce the number of accesses to the data source 103 by reusing the acquired data, and the analysis device 102 can start the analysis while ignoring a data waiting process in the analysis processing. Therefore, the data output device 101 can shorten a period from a request to the completion of an evaluation by the automation of the data acquisition and the preprocessing and the acceleration of the analysis start. In particular, by executing the acquisition of the analysis target data for validation and the analysis processing using the analysis target data for calibration in parallel, it is possible to shorten a lead time until the validation is started.

Note that the present invention is not limited to the above-described embodiments, and includes various modifications and equivalent configurations within the spirit of the appended claims. For example, the above-described embodiments have been described in detail for easy understanding of the present invention, and the present invention is not necessarily limited to those having all the described configurations. In addition, some of the configurations of one embodiment may be replaced with the configurations of another embodiment. In addition, the configuration of one embodiment may be added with the configuration of another embodiment. In addition, addition, deletion, or replacement of other configurations may be performed on some of the configurations of each embodiment.

In addition, some or all of the above-described configurations, functions, units, processing means, and the like may be realized with hardware by, for example, designing with an integrated circuit, or may be realized with software by a processor interpreting and executing a program for realizing each function.

Information such as programs, tables, and files that realize each function can be stored in a recording medium such as a memory, a hard disk, and a solid state drive (SSD), or a recording medium such as an integrated circuit (IC) card, an SD card, and a digital versatile disc (DVD).

In addition, control lines and information lines are illustrated in consideration of necessity for the description, and not all control lines and information lines necessary for implementation are illustrated. In practice, it may be considered that almost all configurations are connected to each other.

## Claims

1. A data output device which includes a processor which executes a program, and a storage device which stores the program, wherein
the data output device is communicably connected to a data source which stores first time-series data regarding a natural environment and an analysis device which inputs analysis target data from the data output device and executes analysis regarding the natural environment,
the data output device includes a recording unit which is capable of recording the analysis target data, and
the processor executes
input processing of receiving an input of an analysis condition regarding the natural environment,
first determination processing of determining whether first analysis target data corresponding to an analysis condition input by the input processing exists in the recording unit, and
first output processing of outputting the first analysis target data to the analysis device on a basis of a first determination result by the first determination processing.

2. The data output device according to claim 1, wherein
the processor executes
first acquisition processing of acquiring the first analysis target data from the data source in a case where it is determined that the first analysis target data does not exist in the recording unit, and
first recording processing of recording the first analysis target data acquired by the first acquisition processing in the recording unit, and
in the first output processing, the processor outputs the first analysis target data to the analysis device.

3. The data output device according to claim 2, wherein
in the first acquisition processing, the processor acquires a plurality of pieces of the first analysis target data,
in the first recording processing, the processor records the first analysis target data in the recording unit each time the first analysis target data is acquired,
the processor execute generation processing of generating dummy data to be used for initial analysis by the analysis device on a basis of the first analysis target data recorded in the recording unit during a period from a start to an end of acquisition by the first acquisition processing, and
in the first output processing, the processor outputs the dummy data to the analysis device.

4. The data output device according to claim 2, wherein
the processor executes shaping processing of shaping the first analysis target data, and
in the first output processing, the processor outputs the first analysis target data shaped by the shaping processing to the analysis device.

5. The data output device according to claim 4, wherein
the processor executes
second determination processing of determining whether second analysis target data deviated from an analysis target period included in the analysis condition exists in the recording unit, and
second output processing of outputting the second analysis target data to the analysis device on a basis of a second determination result by the second determination processing after an end of a first analysis using the first analysis target data by the analysis device.

6. The data output device according to claim 5, wherein
the processor executes
second acquisition processing of acquiring the second analysis target data from the data source in a case where it is determined that the second analysis target data does not exist in the recording unit, and
second recording processing of recording the second analysis target data acquired by the second acquisition processing in the recording unit, and
in the second output processing, the processor outputs the second analysis target data to the analysis device after the end of the first analysis.

7. The data output device according to claim 6, wherein in the second acquisition processing, the processor acquires the second analysis target data from the data source during execution of the first analysis.

8. A data output method executed by a data output device which includes a processor which executes a program, and a storage device which stores the program, wherein
the data output device is communicably connected to a data source which stores first time-series data regarding a natural environment and an analysis device which inputs analysis target data from the data output device and executes analysis regarding the natural environment,
the data output device includes a recording unit which is capable of recording the analysis target data, and
the processor executes
input processing of receiving an input of an analysis condition regarding the natural environment,
first determination processing of determining whether first analysis target data corresponding to an analysis condition input by the input processing exists in the recording unit, and
first output processing of outputting the first analysis target data to the analysis device on a basis of a first determination result by the first determination processing.
